(19) Europäisches Patentamt
European Patent Office
Office européen des brevets

(11) **EP 4 706 983 A1**

(12) **EUROPEAN PATENT APPLICATION**

(43) Date of publication:
**11.03.2026 Bulletin 2026/11**

(21) Application number: **25197818.5**

(22) Date of filing: **25.08.2025**

(51) International Patent Classification (IPC):
***B60C 1/00*** *(2006.01)* ***B60C 9/08*** *(2006.01)*
***B60C 9/22*** *(2006.01)* ***B60C 9/20*** *(2006.01)*
***B60C 11/00*** *(2006.01)* ***B60C 15/00*** *(2006.01)*

(52) Cooperative Patent Classification (CPC):
**B60C 1/0016; B60C 9/08; B60C 9/2009; B60C 9/22; B60C 11/005; C08K 3/36;**
B60C 2009/0425; B60C 2009/2077; B60C 2009/2257; B60C 2015/009

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 JP 2024153962**

(71) Applicant: **SUMITOMO RUBBER INDUSTRIES, LTD.**
**Kobe-shi, Hyogo 651-0072 (JP)**

(72) Inventor: **MISEKI, Yuta**
**Chuo-ku, Kobe-shi, Hyogo, 651-0072 (JP)**

(74) Representative: **TBK**
**Bavariaring 4-6**
**80336 München (DE)**

(54) **TIRE**

(57) To further improve the fuel efficiency performance of a tire, provided is a tire comprises a carcass formed by winding up a two-layer structure of a first carcass ply having a carcass cord and a second carcass ply, a belt having a belt cord, a band having a band cord containing polyethylene terephthalate fiber, and a tread formed using a rubber composition containing more than 75 parts by mass of silica per 100 parts by mass of a rubber component and having an acetone extractable content of more than 15% by mass and provided on the radially outer side of the band, wherein the outer diameter Dt (mm) of the tire, the winding height P1 (mm) of the first carcass ply, the winding height P2 (mm) of the second carcass ply, the diameter D1 (mm) of the band cord, the diameter D2 (mm) of the belt cord, and the diameter D3 (mm) of the carcass cord satisfy (formula 1) and (formula 2).

$$(P1 - P2) / Dt < 0.07 \qquad \text{(formula 1)}$$

$$(D1 + D2 + D3) < 2.00 \qquad \text{(formula 2)}$$

Figure. 1

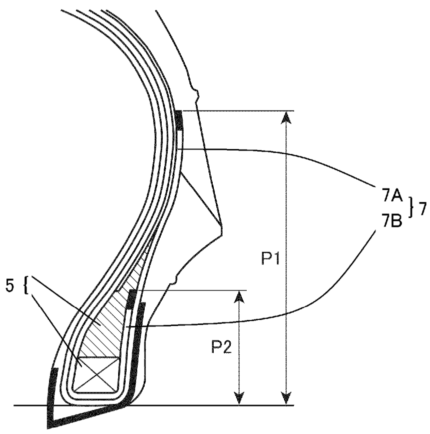


Processed by Luminess, 75001 PARIS (FR)

EP 4 706 983 A1

## Description

[TECHNICAL FIELD]

The present invention relates to a tire.

[BACKGROUND ART]

In recent years, tires with improved fuel efficiency have been proposed (for example, Patent Documents 1 and 2). However, these are still not sufficient.

[Prior art documents]

[Patent documents]

[Patent Document 1] JP 2022-086314 A
[Patent Document 2] JP 2023-049653 A

[SUMMARY OF THE INVENTION]

[PROBLEM TO BE SOLVED BY THE INVENTION]

An object of the present invention is to further improve the fuel efficiency performance of tires.

[MEANS FOR SOLVING THE PROBLEM]

The present invention is;

a tire provided with a carcass having a carcass cord; a belt having a belt cord and provided on an outer side of the carcass in a radial direction of the tire; a band having a band cord and provided on an outer side of the belt in a radial direction of the tire; and a tread provided on an outer side of the band in a tire radial direction, wherein,
the carcass has a two-layer structure of a first carcass ply and a second carcass ply, each of which has a carcass cord, and is winding around the bead;
the band cord is a band cord containing polyethylene terephthalate fibers;
the tread is formed using a rubber composition containing more than 75 parts by mass of silica per 100 parts by mass of a rubber component and having an acetone extractable content of more than 15% by mass;
the following formula (1) is satisfied when the outer diameter of the tire is Dt (mm), the winding height of the first carcass ply located on the outside during winding of the carcass is P1 (mm), and the winding height of the second carcass ply located on the inside is P2 (mm), when the carcass is wound up, and
the following formula (2) is satisfied when the diameter of the band cord is D1 (mm), the diameter of the belt cord is D2 (mm), and the diameter of the carcass cord is D3 (mm).

$$(P1 - P2) / Dt < 0.07 \qquad \text{(formula 1)}$$

$$(D1 + D2 + D3) < 2.00 \qquad \text{(formula 2)}$$

[EFFECT OF THE INVENTION]

According to the present invention, the fuel efficiency performance of the tire can be further improved.

[BRIEF EXPLANATION OF DRAWINGS]

Figure 1 is a diagram illustrating a state in which a carcass is wound up in one embodiment of the present invention.
Figure 2 is a schematic cross-sectional view illustrating a tire according to one embodiment of the present invention.

[EMBODIMENTS FOR CARRYING OUT THE INVENTION]

[1] Features of the tire according to the present invention

First, the features of the tire according to the present invention will be described.

1. Overview

The tire according to the present invention comprises a carcass having a carcass cord, a belt having a belt cord and provided on the radially outer side of the carcass, a band having a band cord and provided on the radially outer side of the belt, and a tread provided on the radially outer side of the band. The carcass has a two-layer structure of a first carcass ply and a second carcass ply each having a carcass cord, and is winding around a bead core. The band cord is a band cord containing a polyethylene terephthalate fiber. The tread is formed using a rubber composition containing more than 75 parts by mass of silica per 100 parts by mass of the rubber component and having an acetone extractable content of more than 15% by mass. Furthermore, when the outer diameter of the tire is Dt (mm), and when the carcass is wound up, the winding height of the first carcass ply located on the outside is P1 (mm), and the winding height of the second carcass ply located on the inside is P2 (mm), the following (formula 1) is satisfied, and when the diameter of the band cord is D1 (mm), the diameter of the belt cord is D2 (mm), and the diameter of the carcass cord is D3 (mm), the following (formula 2) is satisfied.

$$(P1 - P2) / Dt < 0.07 \qquad \text{(formula 1)}$$

$$(D1 + D2 + D3) < 2.00 \qquad \text{(formula 2)}$$

These characteristics make it possible to further improve the fuel efficiency performance of the tire, as will be described later.

2. Mechanism of the effect of the tire according to the present invention

The mechanism by which the above-mentioned effects are exhibited in the tire according to the present invention is believed to be as follows.

(1) Use of PET bands

In the tire according to the present invention, a band cord (PET band) containing polyethylene terephthalate (PET) fibers is used as the band cord.
PET fiber has a higher modulus than nylon 66 (a synthetic polyamide fiber), which has traditionally been used primarily for band cords. Therefore, by using a PET cord for the band cord, it is believed that heat generation due to movement of the band layer during running can be suppressed, thereby further improving fuel efficiency.
On the other hand, a high modulus makes the tire profile rounder, which means that when the tire flexes during running, strain tends to be concentrated in the sidewall, which can lead to increased heat generation in the sidewall.

(2) Carcass

Therefore, in the present invention, as shown in Figure 1, the carcass is formed by winding around the beads 5 and has a two-layer structure of a first carcass ply 7A and a second carcass ply 7B, each of which has a carcass cord. Further, when the outer diameter of the tire is Dt (mm), the winding height of the first carcass ply 7A located on the outside when winding the carcass 7 is P1 (mm), and the winding height of the second carcass ply 7B located on the inside is P2 (mm), ((P1 - P2) / Dt) is controlled to be less than 0.07.
That is, by reducing (P1-P2), the rigidity of the sidewall portion can be increased and concentration of strain in the sidewall portion can be prevented. And it is believed that, by making the ratio of (P1-P2) to the outer diameter of the tire ((P1-P2) / Dt) sufficiently small, that is, less than 0.07, the tire can be sufficiently deflected so that heat generation in the sidewall portion can be suppressed and fuel efficiency can be further improved.

(3) Rubber composition constituting the tread (rubber composition for tread)

In the present invention, a rubber composition (rubber composition for tread) containing more than 75 parts by mass of silica per 100 parts by mass of the rubber component and having an acetone extractable content of more than 15% by mass is used for forming the tread.

(a) Silica blending

By blending silica as much as more than 75 parts by mass per 100 parts by mass of the rubber component, it is possible to reduce the loss tangent (30°C tan δ) measured in tensile deformation mode under conditions of 30 °C, frequency of 10 Hz, initial strain of 5%, and dynamic strain rate of 1% , and it is considered that heat generation in the tire running driving can be suppressed, thereby further improving fuel efficiency.

That is, the loss tangent tan δ is a viscoelastic parameter that indicates the energy absorption performance, and the larger the value, the more energy is absorbed and converted into heat, resulting in greater heat generation. Therefore, by controlling 30 °C tan δ to a small value, heat generation in the tire during running can be suppressed, and fuel efficiency can be further improved.

The loss tangent (tan δ) can be measured using a dynamic viscoelasticity measuring device (e.g., the Eplexor series (registered trademark) manufactured by GABO Corporation) on a test piece having a length of 20 mm, a width of 4 mm, and a thickness of 1 mm cut out from the tire tread with the long side in the tire circumferential direction and the thickness direction in the tire radial direction.

(b) Acetone extractables (AE amount)

The AE amount can be considered as an index showing the amount of a material that imparts plasticity to the rubber component in the rubber composition, such as a softener (plasticizer),, and can also be considered as an index showing the softness of the rubber composition.

In the present invention, since the AE amount is largely controlled to more than 15 % by mass, it is believed that the softness of the tread continues and the effect of bending of the entire tire is easily obtained, thereby enabling further improvement in fuel efficiency performance.

The AE amount can be measured in accordance with JIS K 6229: 2015. Specifically, the AE amount (% by mass) can be obtained by immersing a vulcanized rubber test piece cut out from the measurement site in acetone for a predetermined time and determining the mass reduction rate (%) of the test piece.

More specifically, each vulcanized rubber test piece is immersed in acetone for 72 hours at room temperature and normal pressure to extract the soluble components, and the mass of each test piece before and after extraction is measured, and the AE amount can be calculated according to the following formula.

$$\text{AE amount (\% by mass)} = \text{(mass of rubber test piece before extraction} - \text{mass of rubber test piece after extraction)} / \text{(mass of rubber test piece before extraction)} \times 100$$

(4) Diameter of band cord, belt cord, and carcass cord

In the present invention, the sum (D1+D2+D3) of the band cord diameter D1 (mm), the belt cord diameter D2 (mm), and the carcass cord diameter D3 (mm) is further controlled to be less than 2.00 (formula 2).

By using thin cords, the weight of the bands, belts, and carcass can be reduced, which is believed to lead to further weight reduction of the tire and further improvement of fuel efficiency.

In the above, the "diameter of the band cord" and the "diameter of the carcass cord" can be measured in accordance with the method specified in JIS L1017:2002 "Testing method for chemical fiber tire cords," and the "diameter of the belt cord" can be measured in accordance with the test method specified in JIS G3510:1992 "Testing method for steel tire cords". The "diameter of the cord" refers to the diameter when the circumscribing circle of a cross-section perpendicular to the extending direction of the cord is a perfect circle, and refers to the equivalent circle diameter (the diameter of a circle when a perfect circle with the same cross-sectional area is assumed) when the circumscribing circle is an ellipse or the like.

[2] More preferred embodiments of the tire according to the present invention

The tire according to the present invention can achieve even greater effects by adopting the following aspects.

1. PET band

In the present invention, the PET fiber used in the PET band is preferably a sustainable material (sustainable PET fiber) that is adapted to environmental protection. Here, the sustainable PET fiber refers to a cord that uses sustainable polyester in part or in whole, such as recycled polyester regenerated from plastic waste such as PET bottles or old clothes, or bio-polyester produced using bio-derived raw materials, and can reduce the environmental impact and save resources.
From the viewpoint of the effect of the present invention (further improvement of fuel efficiency performance of the tire), the specific diameter D1 of the PET band (band cord) is preferably 0.60 mm or less, 0.55 mm or less, or 0.54 mm or less. On the other hand, from another viewpoint (durability of the tire), the diameter D1 is preferably 0.45 mm or more, 0.50 mm or more, or 0.54 mm or more.
The PET band may be either a single-ply band made of one twisted yarn or a double-ply band made of two twisted yarns. The filaments constituting the yarn may be PET fibers alone or a mixture of PET fibers and other fibers (such as polyamide fibers).
The number of cords (ends; cords/5 cm) per 50 mm width of the PET band (band cord) is preferably more than 30 cords/5 cm, more preferably more than 40 cords/5 cm, and further preferably more than 45 cords/5 cm. There is no particular upper limit, but it is preferably less than 70 cords/5 cm, more preferably less than 60 cords/5 cm, and further preferably less than 55 cords /5 cm.
The ends of the band cord can be measured as the number of cords present in a width of 5 cm in the direction perpendicular to the longitudinal direction.
The PET band can be produced by treating a PET cord with an adhesive and then bonding it to a predetermined rubber composition for a band. Examples of the adhesive used to bond the PET cord include epoxy compounds such as EX-313 (glycerin polyglycidyl ether, manufactured by Nagase ChemteX Corporation) and RFL (resorcinol-formalin-latex).
The band may be one layer or two layers. The band may be formed over the entire width of the tread, or may be formed only on both ends of the tread.

2. Tread

(1) Content of Silica

In the present invention, the content of silica in the rubber composition for tread is more than 75 parts by mass per 100 parts by mass of the rubber component as described above. From the viewpoint of the effect of the present invention (further improvement of fuel efficiency of the tire), it is more preferably 80 parts by mass or more, more than 80 parts by mass, more than 90 parts by mass, more than 95 parts by mass, more than 100 parts by mass, or 105 parts by mass or more. In this way, by further richly containing silica, the 30 °C tan $\delta$ can be further reduced, so that it is considered that fuel efficiency can be further improved. On the other hand, from another viewpoint (durability of the tire), it is preferably less than 140 parts by mass, less than 130 parts by mass, less than 120 parts by mass, less than 110 parts by mass, 105 parts by mass or less, 95 parts by mass or less, or 80 parts by mass or less.
In addition, when silica is contained, if the particle size (average primary particle size) is too small, the processability is deteriorated, so it is preferable to use silica having a particle size of more than 8 nm. It is more preferred to use silica having a particle size of 15 nm or more. On the other hand, from the viewpoint of ensuring the reinforcement of the rubber, it is preferred to use silica having a particle size of 25 nm or less, and more preferably 22 nm or less.
The average primary particle size of silica means the average value of the values obtained by observing the smallest particle unit of silica constituting the aggregate structure as a circle and measuring the absolute maximum length of the smallest particle as the diameter of the circle, and can be determined by observing with a transmission or scanning electron microscope, measuring 400 or more primary particles of silica observed within the field of view, and averaging the measurements.
Specifically, silica particles picked out from a rubber composition cut out from a tire are directly observed using an electron microscope or the like, and the equivalent cross-sectional area diameter is calculated from the area of each silica particle obtained, and the average value is calculated to calculate the average primary particle diameter.
The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it has a large number of silanol groups. However, from the viewpoint of environmental protection, sustainable silica (silica made from biomass materials or silica recycled from a product containing silica) is preferred.

Silica made from biomass materials (biomass silica ) can be obtained, for example, by extracting silicate from rice husk ash obtained by burning rice husks using a sodium hydroxide solution, and then reacting the silicate with sulfuric acid in the same manner as conventional wet-process silica to produce a silicon dioxide precipitate, which is then filtered, washed with water, dried, and pulverized.

Silica recycled from products containing silica (recycled silica) can be, for example, silica recovered from products containing silica, such as electronic parts such as semiconductors, tires, desiccants, and filtering materials such as diatomaceous earth. The recovery method is not particularly limited, and examples include pyrolysis and decomposition by electromagnetic waves. Among them, silica recovered from electronic parts such as semiconductors or tires is preferred.

When silica crystallizes, it does not dissolve in water and its component silicic acid cannot be used. By controlling the combustion temperature and combustion time, the crystallization of silica in rice husk ash can be suppressed (see JP 2009-2594 A, Akita Prefectural University Web Journal B/2019, vol. 6, pp. 216-222, etc.).

As the amorphous silica extracted from rice husks, commercially available products from Wilmar Co., etc. can be used.

These silicas may be used alone or in combination of two or more. The use of sustainable silica such as biomass silica or recycled silica is preferable from the viewpoint of environmental protection (sustainability).

(2) AE amount

The AE amount in the rubber composition for tread is more than 15 % by mass as described above. From the viewpoint of the effect of the present invention (further improvement of fuel efficiency of the tire), more preferably, it is 15.6 % by mass or more, 15.9 % by mass or more, more than 16 % by mass, more than 17 % by mass, 18.0 % by mass or more, more than 18 % by mass, 18.7 % by mass or more, or 18.9 % by mass or more. In this way, by further increasing the AE amount, the rubber of the tread can be further softened and the effect of bending of the entire tire can be more fully obtained, so that it is considered that the fuel efficiency can be further improved. On the other hand, from another viewpoint (durability of the tire), preferably, it is less than 22 % by mass, less than 21 % by mass, less than 20 % by mass, less than 19 % by mass, 18.9 % by mass or less, 18.7 % by mass or less, 18.0 % by mass or less, 15.9 % by mass or less, or 15.6 % by mass or less.

(3) Isoprene-based rubber content

In the present invention, the rubber composition for tread preferably contains more than 25 parts by mass of isoprene-based rubber per 100 parts by mass of the rubber component.

By containing more than 25 parts by mass of isoprene-based rubber in 100 parts by mass of the rubber component, it is possible to obtain a tread with low heat generation that can reduce heat generation during running, and it is believed that fuel efficiency performance can be further improved. From the viewpoint of the effect of the present invention (further improvement of fuel efficiency performance of the tire), it is more preferably 28 parts by mass or more, 30 parts by mass or more, or 40 parts by mass or more. On the other hand, from another viewpoint (durability of the tire), it is preferably 70 parts by mass or less, 60 parts by mass or less, or 28 parts by mass or less.

Specific examples of isoprene-based rubber include natural rubber (NR), reformed natural rubber (reformed NR), modified natural rubber (modified NR), synthetic polyisoprene (isoprene rubber (IR)), and modified isoprene rubber (modified IR). Of these, NR, which has excellent strength, is preferred. As NR, NR rubbers commonly used in the tire industry, such as SVR-L, SIR20, RSS#3, and TSR20 can be used.

(4) 30 °C tan $\delta$

As described above, by controlling 30 °C tan $\delta$ to be small, it is possible to further improve fuel efficiency. Specifically, from the viewpoint of the effect of the present invention (further improvement of fuel efficiency of the tire), 30°C tan $\delta$ is preferably 0.20 or less, less than 0.20, 0.19 or less, less than 0.19, 0.18 or less, 0.17 or less, or 0.16 or less. On the other hand, from another viewpoint (durability of the tire), it is preferably 0.16 or more, 0.17 or more, 0.18 or more, 0.19 or more, or 0.20 or more.

This 30°C tan $\delta$ can be appropriately adjusted by adjusting, for example, the amount of styrene in the rubber component (polymer), the amount of filler such as silica or carbon black, the content of the softener component, and the content of the resin component in the rubber composition constituting the tread.

Specifically, for example, the loss tangent can be increased by methods such as increasing the amount of styrene in the rubber component (polymer), increasing the amount of filler such as silica or carbon black, reducing the content of the softener component, or increasing the content of the resin component. Conversely, the 30°C tan $\delta$ can be lowered by methods such as decreasing the amount of styrene in the polymer, decreasing the amount of filler such as silica or carbon black, increasing the content of the softener component, decreasing the amount of filler such as silica or carbon black,

increasing the content of the softener component, or decreasing the content of the resin component.

(5) Thickness of tread

In the present invention, the thickness of the tread is preferably more than 6 mm, which is considered to reduce the compression that the band receives and improve the high-speed durability. It is more preferably 8 mm or more, and further preferably 10 mm or more. For example, the upper limit is preferably 20 mm or less, more preferably 15 mm or less, and further preferably 12 mm or less.
The "tread thickness" refers to the thickness of the tread on the tire equatorial plane in the tire radial cross section. In the case where the tread is formed of a single rubber composition, it refers to the thickness of that rubber composition. In the case where the tread is formed of a laminated structure of multiple rubber compositions described below, it refers to the thickness of the cap rubber layer, which is the outermost layer on the contact surface side among those layers, and can be measured by aligning the bead portion to the standardized rim width in a cross section cut out in the radial direction of the tire.
Here, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

(6) Multi-layered tread

In the present invention, the tread may be composed of only one layer (cap rubber layer) which is the ground contact surface, or may be composed of two layers with a base rubber layer provided inside the cap rubber layer, or may be composed of three layers, or may be composed of four or more layers. In this case, the above-mentioned rubber composition for tread is the rubber composition which forms the cap rubber layer which is the outermost layer on the ground contact surface side, and it is preferable that each of the above-mentioned parameters is satisfied.
In this case, the thickness of the cap rubber layer in the entire tread is preferably 10% or more, more preferably 30% or more, further preferably 50% or more, and further preferably 70% or more.

3. Belt

In the present invention, the belt cord constituting the belt is preferably composed of 4 or less filaments, or 2 or less filaments. By reducing the number of filaments in this way, even if the filaments are made of metal, the weight can be reduced, and the tire can be made even lighter, which is considered to further improve the fuel efficiency performance.
The material of the filaments constituting the belt cord is not particularly limited, but is preferably made of metal, more preferably made of iron, and particularly preferably made of steel. The belt cord preferably has a structure of a non-twisted 1×1 structure, a single-twisted 1×2 structure, a 1×3 structure, a 1×4 structure, or a layer-twisted 2+2 structure. The filaments preferably have a circular cross-sectional shape, but may also be elliptical, and may be corrugated or plated.
From the viewpoint of the effect of the present invention (further improvement of fuel efficiency performance of the tire), the specific belt cord diameter D2 is preferably 0.80 mm or less, 0.65 mm or less, 0.60 mm or less, or 0.50 mm or less. On the other hand, from another viewpoint (tire durability), the diameter D2 is preferably 0.45 mm or more, 0.50 mm or more, 0.60 mm or more, or 0.80 mm or more.
The number of cords per 50 mm width of the belt cord (ends: cords /5 cm) is preferably 20 cords /5 cm or more, more preferably 25 cords /5 cm or more, and further preferably 30 cords /5 cm or more. The upper limit is, for example, preferably 60 cords /5 cm or less, more preferably 55 cords /5 cm or less, and further preferably 50 cords /5 cm or less.
The ends of the belt cord can be measured as the number of cords present in a width of 5 cm in the direction perpendicular to the longitudinal direction, in the same manner as in the case of the band cord.

4. Carcass

In the present invention, as described above, the carcass is wound up with a two-layer structure of the first carcass ply and the second carcass ply, and ((P1 - P2)/ Dt) is less than 0.07. From the viewpoint of the effect of the present invention (improvement of tire durability during high-speed running), ((P1 - P2)/ Dt) is preferably 0.067 or less, less than 0.067, less than 0.065, 0.064 or less, less than 0.063, or 0.061 or less. On the other hand, from another viewpoint (tire

durability), it is preferably 0.061 or more, 0.064 or more, or 0.067 or more. This can further increase the rigidity of the sidewall portion, more sufficiently prevent concentration of strain in the sidewall portion, and can also more sufficiently flex the entire tire, which is considered to further suppress heat generation in the sidewall portion and further improve fuel efficiency.

The carcass cord may be made of fibers, and the fibers constituting the carcass cord may be any of the conventionally known fibers, such as polyester fibers, such as PET (polyethylene terephthalate) fibers and PEN (polyethylene naphthalate) fibers, polyamide fibers, such as nylon 6 fibers and nylon 66 fibers, and aramid fibers, and are preferably a single-ply cord made of one twisted yarn or a two-ply cord made of two twisted yarns. The fibers constituting the carcass cord may be recycled from old or scrap products (recycled materials), or may be synthesized from biomass (biomass materials).

The carcass may be one-layered or two-layered, but is preferably one-layered. By using a carcass with a one-layered structure, the tire can be made lighter and have a lower rolling resistance (LRR) than when a carcass with a two-layered structure is used, and it is believed that the fuel efficiency performance can be further improved.

From the viewpoint of the effect of the present invention (improvement of tire durability during high-speed running), the specific diameter D3 of the carcass cord is preferably 0.70 mm or less, 0.65 mm or less, or 0.63 mm or less. On the other hand, from another viewpoint (tire durability), the diameter D3 is preferably 0.55 mm or more, 0.60 mm or more, or 0.63 mm or more.

The carcass cord may have either a single-ply structure in which one yarn is twisted, or a double-ply structure in which two yarns are twisted.

Furthermore, the number of cords per 50 mm width of the carcass cord (ends: cords/5 cm) is preferably 40 cords /5 cm or more, and more preferably 45 cords /5 cm or more. The upper limit is, for example, preferably 60 cords /5 cm or less, and more preferably 55 cords /5 cm or less.

The ends of the carcass cord can be measured as the number of cords present within a width of 5 cm in the direction perpendicular to the longitudinal direction, in the same manner as in the case of the band cord.

5.D1+D2+D3

In the present invention, (D1 + D2 + D3) is set to less than 2.00 as described above. From the viewpoint of the effect of the present invention (improvement of tire durability during high-speed running), it is preferably 1.97 or less, less than 1.80, 1.77 or less, less than 1.70, or 1.67 or less. On the other hand, from another viewpoint (tire durability), it is preferably more than 1.55, more than 1.60, more than 1.65, 1.67 or more, 1.77 or more, or 1.97 or more. This allows the tire to be further lightened, and it is considered that fuel efficiency can be further improved.

[3] Embodiments

Hereinafter, the present invention will be described in detail based on the embodiments.

1. Tire according to the present embodiment

Figure 2 is a schematic cross-sectional view illustrating a tire according to this embodiment. In Figure 2, the vertical direction is the radial direction of the tire, the horizontal direction is the rotational axis direction of the tire, and the direction perpendicular to the paper surface is the circumferential direction of the tire. In Figure 2, the dashed dotted line CL represents the equatorial plane of the tire. Note that the shape of this tire is symmetrical with respect to the equatorial plane except for the tread pattern, so Figure 2 shows 1/4 of the entire tire.

As shown in Figure 2, the tire 1 comprises a tread 2, a pair of sidewalls 3, a pair of chafers 4, a pair of beads 5, an inner liner 6, a carcass 7, a belt 8, a pair of fillers 9, and a band 10, with the carcass 7, the belt 8, the band 10, and the tread 2 being arranged from the inside to the outside in the tire radial direction.

By adopting such a configuration, using a PET band as the band cord, appropriately forming the carcass, and forming the tread using an appropriately blended rubber composition for a tread, and further appropriately controlling each of the above-mentioned parameters, it is believed that it is possible to further improve the fuel efficiency performance as described above.

2. Rubber composition for tread

In this embodiment, the rubber composition for tread can be obtained by kneading various compounding materials such as a rubber component, a reinforcing material, an anti-aging agent, oil, and a resin component.

(1) Compounding materials

(a) Rubber component

The rubber component in the rubber composition for tread is not particularly limited, and for example, diene-based rubbers such as natural rubber (NR), styrene butadiene rubber (SBR), butadiene rubber (BR), isoprene rubber (IR), acrylonitrile butadiene rubber (NBR), chloroprene rubber (CR), and butyl rubber (IIR) may be used. These may be used alone or in combination of two or more kinds. In the present invention, the combination of NR, SBR and BR is preferred.

(a-1) SBR

In the present invention, the weight average molecular weight of SBR is, for example, preferably more than 100,000 and less than 2,000,000. The vinyl content (amount of 1,2-bonded butadiene units) of SBR is, for example, preferably more than 5 % by mass, more preferably more than 10 % by mass, and further preferably more than 15 % by mass. On the other hand, it is preferably less than 70 % by mass, more preferably less than 40 % by mass, and further preferably less than 30 % by mass. The structural identification of SBR (measurement of styrene content and vinyl content) can be performed using, for example, a JNM-ECA series device manufactured by JEOL Ltd.

The SBR is not particularly limited, and for example, emulsion polymerized styrene butadiene rubber (E-SBR), solution polymerized styrene butadiene rubber (S-SBR), and the like can be used. SBR may be either non-modified SBR or modified SBR. Further, hydrogenated SBR obtained by hydrogenating the butadiene part in SBR may be used. The hydrogenated SBR may be obtained by subsequently hydrogenating the BR part in SBR, or a similar structure may be obtained by copolymerization of styrene, ethylene, and butadiene.

The modified SBR is preferably an SBR having a functional group that interacts with a filler such as silica. Examples thereof include end-modified SBR (end-modified SBR having the above functional group at the terminal) in which at least one end of the SBR is modified with a compound having the above functional group (modifying agent),

main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As the modified SBR, for example, SBR modified with a compound (modifying agent) represented by the following formula can be used.

[Chemical formula 1]

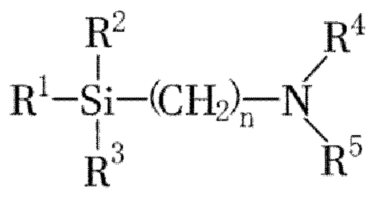

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as

N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method.

As the SBR, for example, SBR manufactured and sold by Sumitomo Chemical Co., Ltd., ENEOS Materials Co., Ltd., Asahi Kasei Co., Ltd., Nippon Zeon Co., Ltd., etc. can be used. Note that SBR may be used alone or in combination of two or more.

The content of SBR in 100 parts by mass of the rubber component is preferably 55 parts by mass or more, 60 parts by mass or more, 62 parts by mass or more, or 78 parts by mass or more. On the other hand, it is preferably 85 parts by mass or less, 80 parts by mass or less, 78 parts by mass or less, or 62 parts by mass or less.

(a-2) Isoprene-based rubber

Examples of isoprene-based rubber include natural rubber (NR), isoprene rubber (IR), reformed NR, modified NR, and modified IR. Among them, as described above, NR is preferred from the standpoint of excellent strength.

As described above, as the NR, for example, SVR-L, SIR20, RSS#3, TSR20, etc., which are common in the tire industry, can be used. As the IR, there is no particular limitation, and for example, IR2200 manufactured by Nippon Zeon Co., Ltd. and the like, which are common in the tire industry, can be used. As the reformed NR, deproteinized natural rubber (DPNR), ultra pure natural rubber (UPNR), and the like can be used. As the modified NR, epoxidized natural rubber (ENR), hydrogenated natural rubber (HNR), grafted natural rubber, and the like can be used. As the modified IR, epoxidized isoprene rubber, hydrogenated isoprene rubber, grafted isoprene rubber, and the like can be used. These may be used alone or in combination of two or more.

The preferred content of the isoprene-based rubber in 100 parts by mass of the rubber component is as described above.

(a-3) BR

The weight average molecular weight of BR is, for example, more than 100,000 and less than 2,000,000. The vinyl content of BR is, for example, more than 1% by mass and less than 30% by mass. The cis content of BR is, for example, more than 1% by mass and 98% by mass or less. The trans content of BR is, for example, more than 1% by mass and less than 60% by mass. Note that the cis content can be measured by infrared absorption spectroscopy.

The BR is not particularly limited, and BR with a high cis content (cis content of 90% or more), BR with a low cis content, BR containing syndiotactic polybutadiene crystals, etc. can be used. The BR may be either unmodified BR or modified BR. As the modified BR, for example, a BR modified with a compound (modifying agent) represented by the following formula can be used.

[Chemical formula 2]

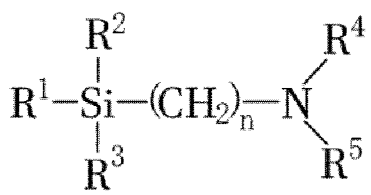

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

Examples of the modified BR modified with the compound (modifying agent) represented by the above formula include BR whose polymerization end (active end) is modified with the compound represented by the above formula.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3-(triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method. These modified BR may be used alone or in combination of two or more.

As the BR, for example, products manufactured by Ube Industries, Ltd., ENEOS Materials Co., Ltd., Asahi Kasei Co., Ltd., Nippon Zeon Co., Ltd., etc. can be used.

The content of BR in 100 parts by mass of the rubber component is preferably 8 parts by mass or more, 10 parts by mass or more, or 12 parts by mass or more. On the other hand, it is preferably 15 parts by mass or less, 12 parts by mass or less, or 10 parts by mass or less.

(a-4) Other rubber components

The rubber composition may contain, as other rubber components, rubbers (polymers) that are commonly used in the manufacture of tires, such as nitrile rubber (NBR), as necessary.

The raw materials (monomers) of the above-mentioned synthetic rubbers such as SBR and BR may be derived from underground resources such as petroleum and natural gas, or may be recycled from rubber products such as tires or

non-rubber products such as polystyrene.

Monomers obtained by recycling (recycled monomers) are not particularly limited, and examples thereof include recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.

The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.

Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, sugar, wood chips, plant residues after useful components are obtained, plant-derived ethanol, and biomass naphtha. Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.

The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.

Whether the raw material of a polymer is derived from biomass can be determined by the percent modern carbon (pMC) measured in accordance with ASTM D6866-10.

The pMC is a ratio of the $^{14}C$ concentration of a sample to the $^{14}C$ concentration of a modern standard reference, and this value is used as an index of the biomass ratio of a compound (rubber). The significance of this value will be described below.

In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all the $^{14}C$ elements that were contained in them at the time of fixation have decayed. Therefore, in the present 21st century, fossil fuels such as coal, oil, and natural gas do not contain any $^{14}C$ elements at all. Therefore, chemical substances produced using these fossil fuels as raw materials do not contain any $^{14}C$ elements at all.

On the other hand, $^{14}C$ is constantly produced by nuclear reactions caused by cosmic rays in the atmosphere, and the amount of $^{14}C$ in the atmospheric environment on Earth is constant, balancing with the decrease due to radioactive decay. Therefore, the $^{14}C$ concentration of materials derived from biomass resources circulating in the current environment is approximately $1 \times 10^{-12}$mol% relative to the total C atoms, as mentioned above. Therefore, the difference between these values can be used to calculate the ratio (biomass ratio) of compounds derived from natural resources (compounds derived from biomass resources) in a certain compound (rubber).

This $^{14}$ C is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass (natural) derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.

For the above reasons, it is preferable from the standpoint of environmental protection (sustainability) to use a material such as rubber having a high pMC value, that is, a material such as rubber having a high biomass ratio for the

rubber composition.

(b) Compounding materials other than rubber components

(b-1) Filler

As described above, the rubber composition for tread contains silica as a reinforcing agent, and may contain other fillers, such as carbon black, calcium carbonate, talc, alumina, clay, aluminum hydroxide, and mica. When silica is used, it is preferable to use it in combination with a silane coupling agent.
As for the content of the filler, first, as described above, silica is more than 75 parts by mass per 100 parts by mass of the rubber component. The total content with other fillers is preferably 85 parts by mass or more, 87 parts by mass or more, 100 parts by mass or more, 101 parts by mass or more, or 109 parts by mass or more per 100 parts by mass of the rubber component. On the other hand, from the viewpoint of dispersibility in the rubber composition, it is preferably 130 parts by mass or less, 115 parts by mass or less, 109 parts by mass or less, 101 parts by mass or less, 87 parts by mass or less, or 73 parts by mass or less.

(i) Silica

In the rubber composition for tread, the content of silica per 100 parts by mass of the rubber component is as described above.
From the viewpoint of obtaining good durability, the BET specific surface area of the silica is preferably more than 100 $m^2/g$, and more preferably more than 130 $m^2/g$, and is preferably less than 250 $m^2/g$, and more preferably less than 200 $m^2/g$. The BET specific surface area is the $N_2$ SA value measured by the BET method according to ASTM D3037-93.
The silica is not particularly limited, and for example, silica commonly used in the tire industry, such as silica prepared by a dry method (anhydrous silica) or silica prepared by a wet method (hydrated silica), can be used. Commercially available products include products from Evonik Industries Co., Ltd., Rhodia Co., Ltd., Tosoh Silica Co., Ltd., Solvay Japan Co., Ltd., Tokuyama Co., Ltd., etc.

(b-1-2) Silane coupling agent

When silica is used, it is preferable to use a silane coupling agent in combination to increase the dispersibility of the silica and to improve the mechanical properties and moldability by reacting with the silica.
The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. Among these, silane coupling agents having a thiocarbonyl group such as the above-mentioned NXT are preferred. These may be used alone or in combination of two or more kinds.

As the silane coupling agent, for example, products of Evonik Industries Co., Ltd., Momentive Co., Ltd., Shin-Etsu Silicone Co., Ltd., Tokyo Chemical Industry Co., Ltd., Azumax Co., Ltd., Dow Corning Toray Co., Ltd., etc. can be used.
The content of the silane coupling agent is preferably more than 3 parts by mass, 5 parts by mass or more, more than 6.1 parts by mass, 7 parts by mass or more, more than 7.3 parts by mass, or 7.5 parts by mass or more, relative to 100 parts by mass of silica. On the other hand, it is preferably less than 15 parts by mass, 12 parts by mass or less, 9 parts by mass or less, 7.5 parts by mass or less, less than 7.4 parts by mass, or less than 6.2 parts by mass.

(b-1-3) Carbon black

Carbon black is preferably used for improving the crack growth resistance, durability, resistance to deterioration due to ultraviolet light, and the like of the tire.

From the viewpoint of reinforcing rubber, the nitrogen adsorption specific surface area ($N_2SA$) of carbon black is preferably, for example, 30m$^2$/g or more, more preferably 50m$^2$/g or more, and further preferably 60m$^2$/g or more. On the other hand, from the viewpoint of heat generation, it is preferably 250m$^2$/g or less, more preferably 150 m$^2$/g or less, and further preferably 120m$^2$/g or less. The nitrogen adsorption specific surface area of carbon black is measured in accordance with ASTM D4820-93.

From the viewpoint of rubber rigidity, the dibutyl phthalate (DBP) absorption of carbon black is preferably, for example, 50 ml/100 g or more, and more preferably 100 ml/100 g or more. On the other hand, from the viewpoint of rubber deformation followability, the DBP absorption of carbon black is preferably 250 ml/100 g or less, and more preferably 150 ml/100 g or less. The DBP absorption of carbon black is measured in accordance with ASTM D2414-93.

The carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC, MPC, and CC. Examples of product numbers include N134, N110, N220, N234, N219, N339, N330, N326, N351, N550, and N762. These may be used alone or in combination of two or more.

The raw material for carbon black may be a biomass material such as lignin, vegetable oil, or a pyrolysis oil obtained by pyrolyzing rubber products containing carbon black, such as waste tires (recycled carbon black), in addition to mineral oil. The use of such sustainable carbon black is preferable from the viewpoint of environmental protection.

The carbon black may be produced by combustion, such as in a furnace process, by hydrothermal carbonization (HTC), or by pyrolysis of methane, such as in a thermal black process.

As commercially available products, products of Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc. can be used. These may be used alone or in combination of two or more kinds.

The content of carbon black per 100 parts by mass of the rubber component is preferably 3 parts by mass or more, 4 parts by mass or more, 5 parts by mass or more, 6 parts by mass or more, 7 parts by mass or more, or 10 parts by mass or more. On the other hand, it is preferably 15 parts by mass or less, 10 parts by mass or less, 7 parts by mass or less, 6 parts by mass or less, or 4 parts by mass or less.

(b-1-4) Other fillers

The rubber composition for tread may further contain, in addition to the above-mentioned carbon black and silica, may further contain fillers commonly used in the tire industry, such as graphite, calcium carbonate, talc, alumina, clay, aluminum hydroxide, mica, and magnesium sulfate. The content of these is, for example, more than 0.1 parts by mass and less than 150 parts by mass per 100 parts by mass of the rubber component.

(b-2) Softener (plasticizer) component

In consideration of proper dispersion of powder materials during kneading, it is preferable to use a softener component as necessary in the rubber composition. The softener component here refers to a material (plasticizer component) that imparts plasticity to the rubber component, and is a concept that includes both softener components that are liquid at 25°C and softener components that are solid at 25°C.

Examples of softeners include resin components, oils, liquid polymers, ester-based plasticizers, etc. These softeners may be derived from mineral resources such as petroleum and natural gas, may be derived from biomass, or may be derived from naphtha recycled from rubber products or non-rubber products. In addition, low molecular weight hydrocarbon components obtained by pyrolysis and extraction of used tires or products containing various components may be used as softeners. Among these, softeners derived from biomass or recycled materials are preferred as sustainable softeners.

These softeners may be used alone or in combination of two or more. The content of the softener component per 100 parts by mass of the rubber component is preferably 30 parts by mass or more, and more preferably 35 parts by mass or more. The upper limit is, for example, preferably 45 parts by mass or less, and more preferably 40 parts by mass or less. The content of the plasticizer component includes the amount of oil contained in the rubber (oil-extended rubber) and the like.

(b-2-1) Oil

Examples of the oil include mineral oil, vegetable oil, and animal oil. From the viewpoint of life cycle assessment, waste oil after use in rubber mixers or engines, or refined waste cooking oil used in restaurants may also be used.

(b-2-1-1) Mineral oil

Mineral oil refers to oil derived from mineral resources such as petroleum and natural gas. Examples of mineral oil include paraffinic oil (mineral oil), naphthenic oil, and aromatic oil.

Specific examples of mineral oils include Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used. Examples of the oils with low PCA include MES, TDAE, and heavy naphthenic oils.

Examples of commercially available mineral oils include paraffinic, aromatic, and naphthenic oils. Examples of such products that can be used include those manufactured by Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Showa Shell Sekiyu Co., Ltd., and Fuji Kosan Co., Ltd. These may be used alone or in combination of two or more kinds.

(b-2-1-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, transesterified oils obtained by transesterification, hydrogenated oils, thermopolymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol. Here, acylglycerol refers to a compound in which a hydroxyl group of glycerin and a fatty acid are ester-bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Dimer or more acylglycerols can be obtained by thermal polymerization, oxidative polymerization, or the like. The acylglycerol may be liquid or solid at room temperature (25°C).

The method for confirming whether acylglycerol is contained in the rubber composition is not particularly limited, but it can be confirmed by $^1$H-NMR measurement. For example, a rubber composition containing triacylglycerol is immersed in deuterated chloroform at room temperature (25°C) for 24 hours to remove the rubber composition, and then $^1$H-NMR is measured at room temperature, with setting, signals nearby 5.26 ppm, nearby 4.28 ppm, and nearby 4.15 ppm are observed, when the tetramethylsilane (TMS) signal is set to 0.00 ppm. Since the signals are presumed to be signals originate from the hydrogen atom bonded to the carbon atom adjacent to the oxygen atom of the ester group, the content of acylglycerol can be confirmed. Note that "nearby" here refers to a range of $\pm$0.10 ppm.

The fatty acid is not particularly limited, and may be an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, a fatty acid with few double bonds, i.e., a saturated fatty acid or a monounsaturated fatty acid is preferable, and oleic acid is preferable. As the vegetable oil containing such a fatty acid, for example, a vegetable oil containing a saturated fatty acid or a monounsaturated fatty acid may be used, or a vegetable oil modified by transesterification or the like may be used. In addition, to produce a vegetable oil containing such a fatty acid, a plant may be improved by breeding, genetic recombination, genome editing, or the like.

Examples of vegetable oils include products commercially available from Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Fuji Kosan Co., Ltd., and Nisshin Oillio Group Co., Ltd.

(b-2-2) Liquid rubber

Liquid rubber is a polymer that is in a liquid state at room temperature (25°C), and is a rubber component that can be extracted from a vulcanized tire by acetone extraction. Examples of the liquid rubber include farnesene-based polymers, liquid diene polymers, and hydrogenated products thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. Here, Mw of the liquid diene polymer is a polystyrene conversion value measured by gel permeation chromatography (GPC).

As the liquid rubber, for example, products manufactured by Kuraray Co., Ltd., Clay Valley Co., Ltd., etc. can be used.

(b-2-3) Resin component

The resin component also functions as a tackifying component, and may be solid or liquid at room temperature. Specific examples of the resin components include rosin-based resin, styrene resin, coumaron-based resin, terpene resin, C5 resin, C9 resin, C5C9 resin, and acrylic resin, and two or more of these may be used in combination. These resin components may be provided with a modified group capable of reacting with silica, etc., as necessary.

Rosin-based resin is a resin whose main component is rosin acid obtained by processing pine resin. This rosin-based resin (rosins) can be classified according to the presence or absence of modification, and can be classified into unmodified rosin (unmodified rosin) and modified rosin (rosin derivative). Examples of unmodified rosin include tall rosin (also known as tall oil rosin), gum rosin, wood rosin, disproportionated rosin, polymerized rosin, hydrogenated rosin, and other chemically modified rosins. The modified rosin is a modified version of unmodified rosin, and examples thereof include rosin esters, unsaturated carboxylic acid-modified rosins, unsaturated carboxylic acid-modified rosin esters, amide compounds of rosin, and amine salts of rosin.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more of the styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; α, β-unsaturated carboxylic acids such as maleic anhydride, and acid anhydrides thereof.

Among coumaron-based resins, coumaron indene resin is preferred. Coumaron indene resin is a resin containing coumaron and indene as monomer components that constitute the skeleton (main chain) of the resin. In addition to coumaron and indene, a monomer component such as styrene, α-methylstyrene, methylindene, and vinyltoluene may be contained in the skeleton.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as a hydrogenated terpene resin obtained by hydrogenating the terpene resin. Examples of the terpene phenol include a resin obtained by copolymerizing the above-mentioned terpene compound and the phenolic compound, and a resin obtained by

hydrogenating above-mentioned resin. Specifically, a resin obtained by condensing the above-mentioned terpene compound, the phenol compound and the formalin can be mentioned. Examples of the phenolic compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumaron, and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of $\alpha$-methylstyrene (AMS resin) or styrene or a copolymer of $\alpha$-methylstyrene and styrene is preferable because it is economical, easy to process, and excellent in heat generation properties. A copolymer of $\alpha$-methylstyrene and styrene is more preferred. As the aromatic vinyl-based resin, for example, those commercially available from Kraton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Corporation, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4,414,370 B, JP 84-6207 A, JP 93-58805 A, JP 89-313522 A, US 5,010,166 B, Toa Synthetic Research Annual Report TREND2000 No. 3, p42-45, etc.) without using polymerization initiators, chain transfer agents, organic solvents, etc. as auxiliary raw materials as much as possible, can be mentioned. In the present invention, (meth) acrylic means methacrylic and acrylic.

Examples of monomer components constituting the acrylic resin include (meth)acrylic acid, (meth)acrylic acid esters (alkyl esters, aryl esters, aralkyl esters, etc.), (meth)acrylamide, and (meth)acrylic acid derivatives such as (meth) acrylamide derivatives.

As the monomer component constituting the acrylic resin, aromatic vinyl compounds such as styrene, $\alpha$-methylstyrene, vinyltoluene, vinylnaphthalene, divinylbenzene, trivinylbenzene, divinylnaphthalene, and the like may be used, together with (meth)acrylic acid or (meth)acrylic acid derivative.

The acrylic resin may be a resin composed of only a (meth) acrylic component or a resin also having a component other than the (meth) acrylic component. The acrylic resin may have a hydroxyl group, a carboxyl group, a silanol group, or the like.

Examples of the resin component which can be used include products of Maruzen Petrochemical Co., Ltd., Sumitomo Bakelite Co., Ltd., Yasuhara Chemical Co., Ltd., Tosoh Corporation, Rutgers Chemicals Co., Ltd., BASF Co., Ltd., Kraton Co., Ltd., Nitto Chemical Co., Ltd., Nippon Shokubai Co., Ltd., ENEOS Co., Ltd., Arakawa Chemical Industry Co., Ltd., and Taoka Chemical Industry Co., Ltd.

(b-3) Wax

The rubber composition may contain a wax. The amount of the wax per 100 parts by mass of the rubber component is, for example, preferably 0.5 parts by mass or more, 1.0 parts by mass or more, 1.5 parts by mass or more, or 1.9 parts by mass or more. The upper limit is preferably 20 parts by mass or less, 15 parts by mass or less, or 10 parts by mass or less.

The wax is not particularly limited, and any wax commonly used in the tire industry can be suitably used. Examples of the wax include mineral waxes and vegetable-derived waxes. Mineral waxes refer to waxes derived from mineral resources such as oil and natural gas. Vegetable waxes refer to waxes derived from natural resources such as plants. Among them, mineral waxes are preferred.

Examples of the wax derived from plants include rice wax, carnauba wax, and candelilla wax. Examples of the mineral wax include paraffin wax, microcrystalline wax, and selected special waxes thereof, and paraffin wax is preferred. In the present invention, the wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more

kinds.

(b-4) Anti-aging agents

The rubber composition may contain an anti-aging agent. The content of the anti-aging agent is, for example, preferably more than 1 part by mass, and less than 10 parts by mass, relative to 100 parts by mass of the rubber component.

The anti-aging agent is not particularly limited, and examples thereof include naphthylamine-based anti-aging agents such as phenyl-α-naphthylamine; diphenylamine-based anti-aging agents such as octylated diphenylamine and 4,4'-bis(α,α'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based anti-aging agents such as 2,2,4-trimethyl-1,2-dihydroquinoline polymers; monophenol-based anti-aging agents such as 2,6-di-t-butyl-4-methylphenol and styrenated phenol; and bis-, tris-, and polyphenol-based anti-aging agents such as tetrakis-[methylene-3-(3',5'-di-t-butyl-4'-hydroxyphenyl)propionate]methane. Among these, p-phenylenediamine-based anti-aging agents and quinoline-based anti-aging agents are preferred, and N-(1,3-dimethylbutyl)-N'-phenyl-p-phenylenediamine and 2,2,4-trimethyl-1,2-dihydroquinoline polymers are more preferred. These may be used alone or in combination of two or more kinds.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(b-5) Processing aids

The rubber composition may contain a processing aid. Examples of the processing aid include metal salts (compounds in which hydrogen atoms of an acid are replaced with metal ions), fatty acid amides, amide esters, and fatty acid esters. These may be used alone or in combination of two or more. Among these, metal salts and fatty acid amides are preferred, and metal salts are more preferred.

Examples of metals used in the metal salt include alkali metals such as potassium and sodium, and alkaline earth metals such as calcium and barium. Magnesium, zinc, nickel, molybdenum, etc. can also be used. Among these, alkali metals are preferred.

Examples of acids used in the metal salt include fatty acids such as lauric acid, myristic acid, and palmitic acid. In addition, boric acid, carbonic acid, hydrochloric acid, nitric acid, sulfuric acid, and the like can also be used.

Examples of commercially available processing aids that can be used include products from Kishida Chemical Co., Ltd., Kenei Pharmaceutical Co., Ltd., Struktol Co., Ltd., and Performance Additives Co., Ltd.

The content of the processing aid is preferably 1 part by mass or more, and more preferably 2 parts by mass or more, relative to 100 parts by mass of the rubber component. The upper limit is, for example, preferably 6 parts by mass or less, and more preferably 4 parts by mass or less.

(b-6) Lubricant (stearic acid)

The rubber composition may contain a lubricant. As the lubricant, a lubricant based on a fatty acid derivative such as stearic acid can be preferably used. As the stearic acid, a conventionally known one can be used. Specifically, for example, products of NOF Corporation, Kao Corporation, Fujifilm Wako Pure Chemical Co. Ltd., Chiba Fatty Acid Co. Ltd., etc. can be used. In addition, Struktol WB16 manufactured by Struktol Co., Ltd., and the like can also be used.

The content of stearic acid per 100 parts by mass of the rubber component is, for example, preferably more than 0.5 parts by mass and less than 10.0 parts by mass.

(b-7) Zinc oxide

The rubber composition may contain zinc oxide. The content of zinc oxide is, for example, more than 0.5 parts by mass and less than 10 parts by mass with respect to 100 parts by mass of the rubber component. As the zinc oxide, a conventionally known product can be used, and for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(b-8) Crosslinking agents and vulcanization accelerators

The rubber composition preferably contains a crosslinking agent such as sulfur. The content of the crosslinking

agent is, for example, more than 0.1 parts by mass and less than 10.0 parts by mass per 100 parts by mass of the rubber component. The sulfur content is the pure sulfur content, and in the case of using insoluble sulfur, it is the content excluding the oil content.

Examples of sulfur include powdered sulfur, precipitated sulfur, colloidal sulfur, insoluble sulfur, highly dispersible sulfur, soluble sulfur, and the like which are generally used in the rubber industry. These may be used alone or in combination of two or more kinds.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Cross-linking agents other than sulfur may be used. Specific examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys Co., Ltd., and KA9188 (1,6-bis (N, N'-dibenzylthiocarbamoyldithio)hexane; hybrid crosslinking agent) manufactured by Lanxess Co., Ltd., and organic peroxides such as dicumylperoxide.

The rubber composition preferably contains a vulcanization accelerator. The content of the vulcanization accelerator per 100 parts by mass of the rubber component is, for example, more than 0.3 parts by mass and less than 10.0 parts by mass.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-9) Other

In addition to the above-mentioned components, the rubber composition may contain additives commonly used in the tire industry, such as organic fillers such as cellulose fibers, and organic peroxides, as necessary. The content of these additives is, for example, more than 0.1 parts by mass and less than 50 parts by mass relative to 100 parts by mass of the rubber component.

In the present invention, among the above-mentioned materials, various materials containing carbon atoms (e.g., rubber, oil, resin, vulcanization accelerator, anti-aging agent, surfactant, etc.) may be derived from carbon dioxide in the atmosphere. As a method for obtaining the compound of the present invention from carbon dioxide, carbon dioxide may be directly converted, or methane obtained through a methanation process for synthesizing methane from carbon dioxide may be converted.

(2) Preparation of rubber composition for tread

The rubber composition for treads can be prepared by a general method, for example, a manufacturing method including a base kneading step of kneading a rubber component with a filler such as silica, and a finish kneading step of kneading the kneaded product obtained in the base kneading step with a crosslinking agent.

The kneading can be carried out using a known (sealed type) kneading machine such as a Banbury mixer, a kneader, or an open roll.

The kneading temperature in the base kneading step is, for example, higher than 50 °C and lower than 200 °C, and the kneading time is, for example, longer than 30 seconds and shorter than 30 minutes. In the base kneading step, in addition to the above-mentioned components, compounding agents conventionally used in the rubber industry, for example, softeners such as oil, stearic acid, zinc oxide, anti-aging agents, waxes, vulcanization accelerators, etc. may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80 °C, and the kneading time is, for example, longer than 1 minute and shorter than 15 minutes. In the finish kneading step, in addition to the above components, a vulcanization accelerator, zinc oxide, etc. may be appropriately added and kneaded as necessary.

The rubber composition obtained as described above can then be extruded into a predetermined shape to form a tread.

3. Tire manufacturing

The tire according to the present embodiment can be manufactured by a normal method. First, the rubber composition obtained as described above is molded into a predetermined shape to manufacture a tread. Next, the rubber composition is combined with other rubber components on a tire molding machine to manufacture an unvulcanized tire.
Specifically, an inner liner as a member for ensuring the airtightness of the tire, a carcass as a member for enduring the load, impact, and filled air pressure received by the tire, and a belt member and band as a member for tightly fastening the carcass and increasing the rigidity of the tread are winding around a molding drum, and both ends of the carcass are fixed to both side edges, and bead portions as members for fixing the tire to the rim are arranged. After molding into a toroidal shape, a tread is pasted to the center of the outer periphery, and a sidewall is pasted to the radially outer side to form the side portion, thereby producing an unvulcanized tire.
The unvulcanized tire thus produced is then heated and pressurized in a vulcanizer to obtain a tire. The vulcanization step can be carried out by applying a known vulcanization method. The vulcanization temperature is, for example, higher than 120 °C and lower than 200 °C, and the vulcanization time is, for example, longer than 5 minutes and shorter than 15 minutes.
As described above, the tire obtained as above uses a PET band as a band cord, the carcass is appropriately formed, and the tread is formed using a properly blended rubber composition for a tread. Furthermore, each of the parameters described above is appropriately controlled, so that it is possible to further improve fuel efficiency performance.
The tire according to the present invention can be suitably used as a passenger car tire, a large passenger car tire, a large SUV tire, a truck/bus tire, a motorcycle tire, a racing tire, a studless tire (winter tire), an all-season tire, a run-flat tire, or the like, and is particularly preferably used as a passenger car tire.

## EXAMPLES

Examples (embodiments) considered to be preferable for carrying out the present invention will be described below, but the scope of the present invention is not limited to these examples.
A tire (tire size: 235/55R19) consisting of a tread molded from the various compounding materials shown below, and tire components such as a band, belt, and carcass is examined, and the results calculated based on the evaluation method for fuel efficiency performance described below are also shown at the bottom of Tables 2 and 3.

1. Preparation of rubber composition

A rubber composition for tread is prepared using various compounding materials shown below.

(1) Compounding materials

(a) Rubber component

(a-1) NR: TSR20
(a-2) SBR-1: HPR850 (modified S-SBR) manufactured by ENEOS Materials Corporation (Styrene content: 26% by mass, vinyl content: 59 % by mass, Tg: -25°C, non-oil extended product)
(a-3) SBR-2: Modified S-SBR produced according to Production Example 1 described later. (Styrene content: 33% by mass, vinyl content: 46% by mass, Tg: -34°C, non-oil extended product)
(a-4) SBR-3: Modified S-SBR produced according to Production Example 2 described later. (Styrene content: 25% by mass, vinyl content: 17% by mass, Tg: -54°C, non-oil extended product)
(a-5) BR: BR150B manufactured by Ube Industries (cis content: 96% by mass)

(Production Example 1)

The SBR - 2 is prepared according to the following procedure. First, cyclohexane, tetrahydrofuran, styrene, and 1,3-butadiene are charged into a nitrogen-substituted autoclave reactor. After adjusting the temperature of the reactor contents to 20 °C, n-butyllithium is added to initiate polymerization. Then, polymerization is carried out under adiabatic

conditions, and when the maximum temperature reaches 85 °C and the polymerization conversion rate reaches 99%, 1,3-butadiene is added and polymerization is continued for another 5 minutes. Then, a mixture of tetraglycidyl-1,3-bisaminomethylcyclohexane (monomer) and an oligomer component is added as a modifying agent to carry out the reaction. After the polymerization reaction is completed, 2,6-di-tert-butyl-p-cresol is added, the solvent is removed by steam stripping, and the mixture is dried by a hot roll adjusted to 110°C to obtain SBR-2.

(Production Example 2)

The above SBR-3 is prepared in the same manner as in Production Example 1, except that N,N-bis(trimethylsilyl)-3-aminopropyltriethoxysilane is used as the modifying agent.

(b) Compounding materials other than rubber components

(b-1) Carbon black-1: Show Black N220 manufactured by Cabot Japan Co., Ltd. ($N_2$ SA: 111 $m^2$ /g)
(b-2) Carbon black-2: Seast SO (FEF) manufactured by Tokai Carbon Co., Ltd. ($N_2$ SA: 42 $m^2$/g)
(b-3) Silica-1: Ultrasil VN3 manufactured by Eponic Industries ($N_2$ SA: 175 $m^2$ /g, average primary particle diameter: 17 nm)
(b-4) Silica-2: Ultrasil 5000GR manufactured by Eponic Industries ($N_2$ SA: 115 $m^2$ /g, average primary particle diameter: 21 nm)
(b-5) Silane coupling agent-1: Si266 manufactured by Evonik Industries (Bis(3-triethoxysilylpropyl)disulfide)
(b-6) Silane coupling agent-2: NXT Z 45 manufactured by Momentive (3-Octanoylthiopropyltriethoxysilane)
(b-7) Oil: vivatec 500 manufactured by H&R Co., Ltd.
(b-8) Resin: Sylvatraxx 4401 manufactured by Kraton Co., Ltd. (copolymer of $\alpha$-methylstyrene and styrene)
(b-9) Wax: Ozoace 0355 (paraffin wax) manufactured by Nippon Seiro Co., Ltd.
(b-10) Anti-aging agent-1: Nocrac 6C manufactured by Ouchi Shinko Chemical Industry Co., Ltd. (N-(1,3-dimethylbutyl)-N'-phenyl-p-phenylenediamine)
(b-11) Anti-aging agent-1: Antage RD manufactured by Kawaguchi Chemical Industry Co., Ltd. (2,2,4-trimethyl-1,2-dihydroquinoline)
(b-12) Stearic acid: bead stearic acid "Tsubaki" manufactured by NOF Corp.
(b-13) Zinc oxide: Zinc oxide No. 1 manufactured by Mitsui Mining & Smelting Co., Ltd.
(b-14) Sulfur: HK-200-5 (powdered sulfur) manufactured by Hosoi Chemical Industry Co., Ltd.
(b-15) Vulcanization accelerator-1: Nocceler CZ manufactured by Ouchi Shinko Chemical Industry Co., Ltd. (N-cyclohexyl-2-benzothiazylsulfenamide (CBS))
(b-16) Vulcanization accelerator-2: Nocceler D manufactured by Ouchi Shinko Chemical Industry Co., Ltd. (N,N'-diphenylguanidine (DPG))

(2) Preparation of rubber composition for tread

Based on each of the formulations A to F shown in Table 1, materials other than sulfur and the vulcanization accelerator are kneaded for 5 minutes under the condition of 150° C. using a 1.7 L Banbury mixer manufactured by Kobe Steel, Ltd. to obtain a kneaded product.

Next, sulfur and a vulcanization accelerator are added to the kneaded mixture, and the mixture is kneaded for 5 minutes under conditions of 80° C. using an open roll to obtain rubber compositions for treads of formulations A to F.

[Table 1]

| | Formulation | | | | | |
|---|---|---|---|---|---|---|
| (parts by mass) | A | B | C | D | E | F |
| N.R. | 13 | 10 | 10 | 10 | 10 | 28 |
| SBR-1 | 72 | 58 | 58 | 40 | 35 | 0 |
| SBR-2 | 0 | 20 | 20 | 0 | 0 | 0 |
| SBR-3 | 0 | 0 | 0 | 38 | 43 | 62 |
| B.R. | 15 | 12 | 12 | 12 | 12 | 10 |
| Carbon Black-1 | 10 | 7 | 0 | 0 | 0 | 0 |

(continued)

| | Formulation | | | | | |
|---|---|---|---|---|---|---|
| (parts by mass) | A | B | C | D | E | F |
| Carbon Black-2 | 0 | 0 | 6 | 4 | 4 | 4 |
| Silica-1 | 63 | 0 | 0 | 0 | 0 | 0 |
| Silica-2 | 0 | 80 | 95 | 105 | 105 | 105 |
| Silane coupling agent-1 | 5.5 | 6 | 0 | 0 | 0 | 0 |
| Silane coupling agent-2 | 0 | 0 | 7 | 6.5 | 6.5 | 6.5 |
| Oil | 8 | 19 | 21 | 29.5 | 32.75 | 31.5 |
| Resin | 7.4 | 6.5 | 6.5 | 6.5 | 6.5 | 6.5 |
| Wax | 1.7 | 1.9 | 1.9 | 1.9 | 1.9 | 1.9 |
| Anti-aging agent-1 | 2.1 | 2.5 | 2.5 | 2.5 | 2.5 | 2.5 |
| Anti-aging agent-2 | 1 | 1 | 1 | 1 | 1 | 1 |
| Stearic acid | 3 | 2 | 2 | 2 | 2 | 2 |
| Zinc oxide | 2.5 | 2 | 2 | 2 | 2 | 2 |
| Sulfur | 1.6 | 1.35 | 1.35 | 1.6 | 1.6 | 1.6 |
| Vulcanization accelerator-1 | 1.3 | 2.2 | 2.2 | 2.2 | 2.2 | 2.2 |
| Vulcanization accelerator-2 | 1.7 | 2 | 2 | 2 | 2 | 2 |
| AE amount (% by mass) | 12.4 | 15.9 | 15.6 | 18.0 | 18.9 | 18.7 |
| 30°C tan $\delta$ | 0.21 | 0.20 | 0.19 | 0.18 | 0.17 | 0.16 |

2. Molding tire components (tread, band, belt)

(1) Molding of tread

Next, the rubber composition obtained above is used to mold a tread (cap tread) with a predetermined thickness.

(2) Molding of band

In parallel, each band cord shown in Tables 2 and 3 is topped with a predetermined rubber composition for bands to form each band.

Among the specifications of each band cord shown in Tables 2 and 3, the cord diameter D1 is a value measured as the circle equivalent diameter of the circumscribed circle of a cross-section perpendicular to the extending direction in accordance with the method specified in JIS L1017:2002 "Testing Methods for Chemical Fiber Tire Cords". In addition, in the cord configuration, for example, "1100 dtex/2 " indicates that the cord is configured by twisting together two single yarns having a fineness of 1100 dtex.

(3) Molding of belt

Similarly, each belt cord shown in Tables 2 and 3 is topped with a predetermined rubber composition for belts to form each belt.

Among the specifications of each belt cord shown in Tables 2 and 3, the cord diameter D2 is a value measured as the circle equivalent diameter of a circumscribing circle of a cross-section perpendicular to the extending direction in accordance with the test method specified in JIS G3510:1992 "Test Method for Steel Tire Cords".

(4) Molding of carcass

Similarly, each carcass cord shown in Tables 2 and 3 is topped with a predetermined rubber composition for carcass to form each carcass.

Among the specifications of each carcass cord shown in Tables 2 and 3, the cord diameter D3 is a value

measured as the circle equivalent diameter of a circumscribed circle of a cross-section perpendicular to the extending direction in accordance with the test method specified in JIS L1017:2002 "Test method for synthetic fiber tire cords".

3. Tire manufacturing

Next, each of the treads, bands, belts, and carcasses obtained above is pasted together with other tire components to form an unvulcanized tire, and the tire is press-vulcanized for 10 minutes under a condition of 170°C to manufacture each of the test tires (outer diameter Dt: 741.1 mm) of Examples 1 to 9 and Comparative Examples 1 to 5.

When the carcass is wound up, the winding height P1 (mm) of the first carcass ply located on the outside and the winding height P2 (mm) of the second carcass ply located on the inside are as shown in Tables 2 and 3.

4. Parameters

Then, (P1 - P2) / Dt and D1 + D2 + D3 are calculated.

5. Performance evaluation test (evaluation of fuel efficiency)

Using a rolling resistance tester, the rolling resistance coefficient (RRC) of each test tire is measured when the tire runs on a drum at a speed of 80 km/h under the following conditions.

Rim used: 19 × 7.5J
Internal pressure: 210 kPa
Load: 6.47kN

Next, the results of Comparative Example 1 are set as 100 and indexed according to the following formula to evaluate fuel efficiency performance. A larger value indicates smaller rolling resistance and better fuel efficiency performance.

$$\text{Fuel efficiency} = [(\text{Result of Comparative Example 1}) / (\text{Results of Test Tire})] \times 100$$

[Table 2]

| | Comparative Example | | | | | Example | |
|---|---|---|---|---|---|---|---|
| | 1 | 2 | 3 | 4 | 5 | 1 | 2 |
| (Tread) | | | | | | | |
| Formulation | B | A | A | A | A | B | B |
| Silica content (parts by mass) | 80 | 63 | 63 | 63 | 63 | 80 | 80 |
| AE amount (% by mass) | 15.9 | 12.4 | 12.4 | 12.4 | 12.4 | 15.9 | 15.9 |
| 30°C tan δ | 0.20 | 0.21 | 0.21 | 0.21 | 0.21 | 0.20 | 0.20 |
| NR content (parts by mass) | 10 | 13 | 13 | 13 | 13 | 10 | 10 |
| (Band) | | | | | | | |
| Cord Material | N66 | N66 | PET | N66 | PET | PET | PET |
| Code structure | 1400d tex/2 | 1400d tex/2 | 1100d tex/2 | 1400d tex/2 | 1670d tex/2 | 1100d tex/2 | 1100d tex/2 |
| Cord diameter D1 (mm) | 0.66 | 0.66 | 0.54 | 0.66 | 0.68 | 0.54 | 0.54 |
| (Belt cord) | | | | | | | |
| Number of filaments | 8 | 8 | 8 | 8 | 8 | 8 | 8 |

(continued)

| | | | | | | | |
|---|---|---|---|---|---|---|---|
| (Band) | | | | | | | |
| Cord diameter D2 (mm) | | 0.8 | 0.8 | 0.8 | 0.8 | 0.8 | 0.8 | 0.8 |
| (Carcass) | | | | | | | | |
| Code structure | | 1670d tex/2 | 1670d tex/2 | 1670d tex/2 | 1670d tex/2 | 2200d tex/2 | 1440d tex/2 | 1440d tex/2 |
| Cord diameter D3 (mm) | | 0.68 | 0.68 | 0.68 | 0.68 | 0.78 | 0.63 | 0.63 |
| Winding height (mm) | P1 | 80 | 80 | 80 | 80 | 80 | 80 | 80 |
| | P2 | 20 | 20 | 20 | 30 | 20 | 30 | 32.5 |
| (Parameter) | | | | | | | | |
| (P1 - P2) / Dt | | 0.081 | 0.081 | 0.081 | 0.067 | 0.081 | 0.067 | 0.064 |
| D1 + D2 + D3(mm) | | 2.14 | 2.14 | 2.02 | 2.14 | 2.26 | 1.97 | 1.97 |
| (Evaluation) | | | | | | | | |
| Fuel efficiency | | 100 | 96 | 100 | 99 | 99 | 108 | 109 |

[Table 3]

| | | Example | | | | | | |
|---|---|---|---|---|---|---|---|---|
| | | 3 | 4 | 5 | 6 | 7 | 8 | 9 |
| (Tread) | | | | | | | | |
| Formulation | | B | C | D | E | E | E | F |
| Silica content (parts by mass) | | 80 | 95 | 105 | 105 | 105 | 105 | 105 |
| AE amount (% by mass) | | 15.9 | 15.6 | 18.0 | 18.9 | 18.9 | 18.9 | 18.7 |
| 30°C tan $\delta$ | | 0.20 | 0.19 | 0.18 | 0.17 | 0.17 | 0.17 | 0.16 |
| NR content (parts by mass) | | 10 | 10 | 10 | 10 | 10 | 10 | 28 |
| (Band) | | | | | | | | |
| Cord Material | | PET | PET | PET | PET | PET | PET | PET |
| Code structure | | 1100d tex/2 | 1100d tex/2 | 1100d tex/2 | 1100d tex/2 | 1100d tex/2 | 1100d tex/2 | 1100d tex/2 |
| Cord diameter D1 (mm) | | 0.54 | 0.54 | 0.54 | 0.54 | 0.54 | 0.54 | 0.54 |
| (Belt cord) | | | | | | | | |
| Number of filaments | | 8 | 8 | 8 | 8 | 4 | 2 | 2 |
| Cord diameter D2 (mm) | | 0.8 | 0.8 | 0.8 | 0.8 | 0.5 | 0.6 | 0.6 |
| (Carcass) | | | | | | | | |
| Code structure | | 1440d tex/2 | 1440d tex/2 | 1440d tex/2 | 1440d tex/2 | 1440d tex/2 | 1440d tex/2 | 1440d tex/2 |
| Cord diameter D3 (mm) | | 0.63 | 0.63 | 0.63 | 0.63 | 0.63 | 0.63 | 0.63 |
| Winding height (mm) | P1 | 80 | 80 | 80 | 80 | 80 | 80 | 80 |
| | P2 | 35 | 35 | 35 | 35 | 35 | 35 | 35 |
| (Parameter) | | | | | | | | |
| (P1 - P2) / Dt | | 0.061 | 0.061 | 0.061 | 0.061 | 0.061 | 0.061 | 0.061 |
| D1 + D2 + D3(mm) | | 1.97 | 1.97 | 1.97 | 1.97 | 1.67 | 1.77 | 1.77 |

(continued)

| (Carcass) | | | | | | | |
|---|---|---|---|---|---|---|---|
| (Evaluation) | | | | | | | |
| Fuel efficiency | 110 | 110 | 112 | 113 | 114 | 116 | 117 |

Although the present invention has been described based on the embodiment, the present invention is not limited to the above embodiment. Various modifications can be made to the above embodiment within the same and equivalent scope of the present invention.

[EXPLANATION OF SYMBOLS]

1. Tire
2. Tread
3. Sidewall
4. Chafer
5. Beads
6. Inner liner
7. Carcass
7A First carcass ply
7B Second carcass ply
8. Belt
9. Filler
10. Bands
CL. Tire equatorial plane

## Claims

1. A tire provided with a carcass having a carcass cord; a belt having a belt cord and provided on an outer side of the carcass in a radial direction of the tire; a band having a band cord and provided on an outer side of the belt in a radial direction of the tire; and a tread provided on an outer side of the band in a tire radial direction, wherein,

   the carcass has a two-layer structure of a first carcass ply and a second carcass ply, each of which has a carcass cord, and is winding around the bead;
   the band cord is a band cord containing polyethylene terephthalate fibers;
   the tread is formed using a rubber composition containing more than 75 parts by mass of silica per 100 parts by mass of a rubber component and having an acetone extractable content of more than 15% by mass;
   the following formula (1) is satisfied when the outer diameter of the tire is Dt (mm), the winding height of the first carcass ply located on the outside during winding of the carcass is P1 (mm), and the winding height of the second carcass ply located on the inside is P2 (mm), when the carcass is wound up, and
   the following formula (2) is satisfied when the diameter of the band cord is D1 (mm), the diameter of the belt cord is D2 (mm), and the diameter of the carcass cord is D3 (mm).

$$(P1 - P2) / Dt < 0.07 \qquad \text{(formula 1)}$$

$$(D1 + D2 + D3) < 2.00 \qquad \text{(formula 2)}$$

2. The tire according to claim 1, wherein the ((P1 - P2) / Dt) is 0.067 or less, preferably less than 0.067, preferably less than 0.065, preferably 0.064 or less, preferably less than 0.063, or preferably 0.061 or less.

3. The tire according to claim 1 or 2, wherein the (D1 + D2 + D3) is 1.97 or less, preferably less than 1.80, preferably 1.77 or less, preferably less than 1.70, or preferably 1.67 or less.

4. The tire according to any one of claims 1 to 3, wherein a content of silica in the rubber composition is 80 parts by mass

or more, preferably more than 80 parts by mass, preferably more than 90 parts by mass, preferably 95 parts by mass or more, preferably more than 100 parts by mass, or preferably 105 parts by mass or more, per 100 parts by mass of the rubber component.

5. The tire according to any one of claims 1 to 4, wherein the acetone extractables in the rubber composition is 15.6% by mass or more, preferably 15.9% by mass or more, preferably more than 16% by mass, preferably more than 17% by mass, preferably 18.0% by mass or more, preferably more than 18% by mass, preferably 18.7% by mass or more, or preferably 18.9% by mass or more.

6. The tire according to any one of claims 1 to 5, wherein the thickness of tread is more than 6 mm, preferably 8 mm or more, or preferably 10 mm or more.

7. The tire according to any one of claims 1 to 6, wherein the tread is constructed of two layers.

8. The tire according to any one of claims 1 to 7, wherein the rubber composition contains more than 25 parts by mass, preferably 28 parts by mass or more, preferably 30 parts by mass or more, or preferably 40 parts by mass or more of an isoprene-based rubber per 100 parts by mass of the rubber component.

9. The tire according to claim 8, wherein the isoprene-based rubber is a natural rubber.

10. The tire according to any one of claims 1 to 9, wherein the loss tangent (30°C tan $\delta$) of the rubber composition measured under conditions of 30°C, a frequency of 10 Hz, an initial strain of 5%, and a dynamic strain rate of 1%, in a deformation mode: tensile, is 0.20 or less, preferably less than 0.20, preferably 0.19 or less, preferably less than 0.19, preferably 0.18 or less, preferably 0.17 or less, or preferably 0.16 or less.

11. The tire according to any one of claims 1 to 10, wherein the belt cord is composed of one or more and four or less filaments.

12. The tire according to any one of claims 1 to 11, wherein the polyethylene terephthalate fiber is a sustainable PET fiber.

13. The tire according to any one of claims 1 to 12, wherein the rubber composition contains a vegetable oil.

14. The tire according to any one of claims 1 to 13, wherein the rubber composition contains a sustainable carbon black.

15. The tire according to any one of claims 1 to 14, wherein the rubber composition contains a sustainable silica.

Figure. 1

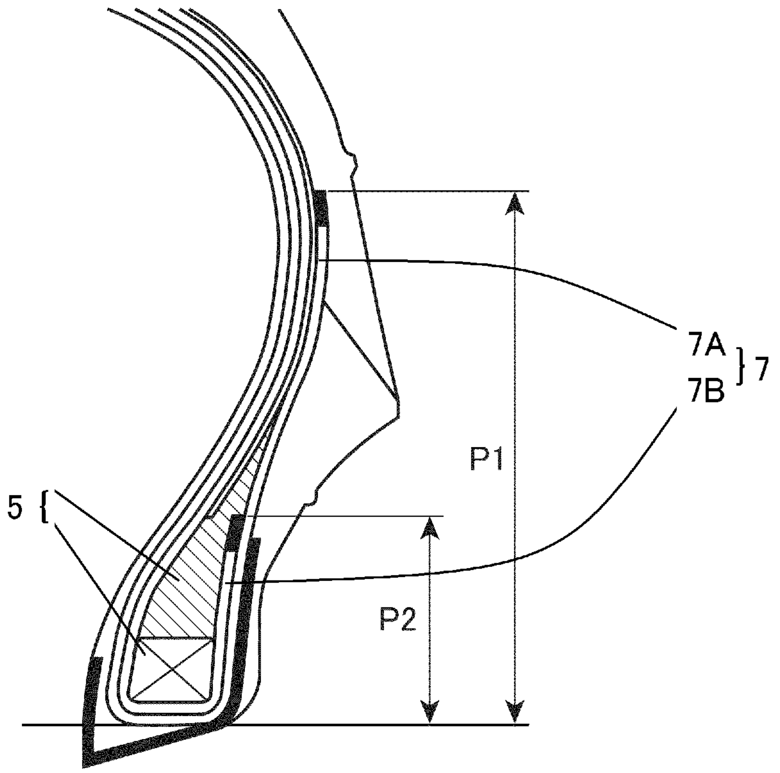

Figure 2

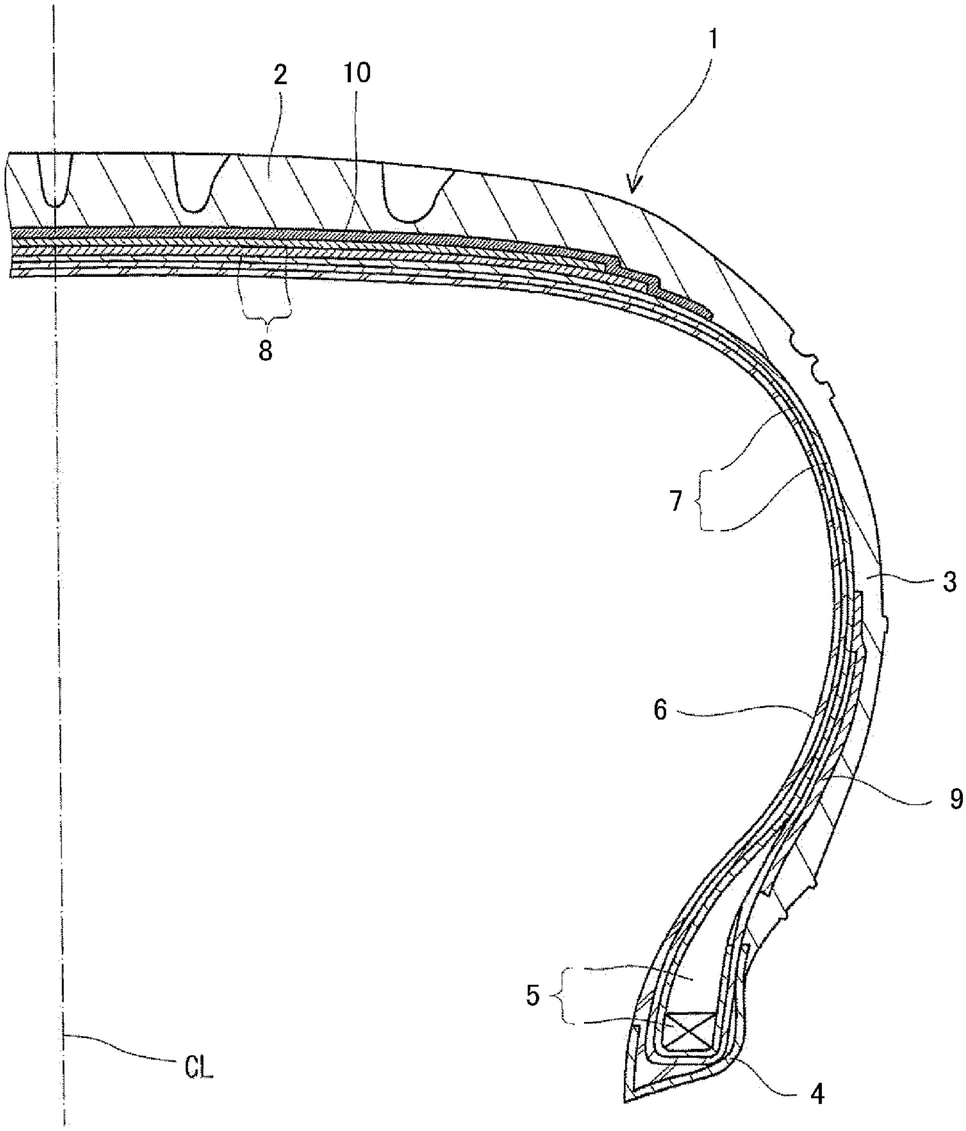

Europäisches Patentamt
European Patent Office
Office européen des brevets

# EUROPEAN SEARCH REPORT

Application Number
EP 25 19 7818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 546 248 A1 (SUMITOMO RUBBER IND [JP]) 2 October 2019 (2019-10-02) * paragraphs [0060] - [0068], [0075] - [0078]; claims 1-3; figures 1-3; table 1 * ----- | 1-15 | INV. B60C1/00 B60C9/08 B60C9/22 B60C9/20 B60C11/00 B60C15/00 |
| A | EP 1 209 009 A2 (SUMITOMO RUBBER IND [JP]) 29 May 2002 (2002-05-29) * paragraph [0027]; claims 1-9; figure 1; table 1 * ----- | 1-15 | |
| A | EP 4 074 774 A2 (SUMITOMO RUBBER IND [JP]) 19 October 2022 (2022-10-19) * claims 1-11; figures 1-3 * ----- | 1-15 | |
| A | EP 4 186 713 A1 (SUMITOMO RUBBER IND [JP]) 31 May 2023 (2023-05-31) * claims 1-14; figures 1,2 * ----- | 1-15 | |
| | | | TECHNICAL FIELDS SEARCHED (IPC) |
| | | | B60C |

The present search report has been drawn up for all claims

2

| Place of search | Date of completion of the search | Examiner |
|---|---|---|
| Munich | 15 December 2025 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 7818

This annex lists the patent family members relating to the patent documents cited in the above-mentioned European search report. The members are as contained in the European Patent Office EDP file on
The European Patent Office is in no way liable for these particulars which are merely given for the purpose of information.

15-12-2025

| Patent document cited in search report | Publication date | Patent family member(s) | Publication date |
|---|---|---|---|
| EP 3546248 A1 | 02-10-2019 | CN 110317368 A | 11-10-2019 |
| | | EP 3546248 A1 | 02-10-2019 |
| | | JP 2019177838 A | 17-10-2019 |
| | | US 2019299715 A1 | 03-10-2019 |
| EP 1209009 A2 | 29-05-2002 | DE 60126043 T2 | 24-05-2007 |
| | | EP 1209009 A2 | 29-05-2002 |
| | | JP 4053727 B2 | 27-02-2008 |
| | | JP 2002154304 A | 28-05-2002 |
| | | US 2002088523 A1 | 11-07-2002 |
| EP 4074774 A2 | 19-10-2022 | EP 4074774 A2 | 19-10-2022 |
| | | JP 7771524 B2 | 18-11-2025 |
| | | JP 2022163941 A | 27-10-2022 |
| EP 4186713 A1 | 31-05-2023 | EP 4186713 A1 | 31-05-2023 |
| | | JP 7756855 B2 | 21-10-2025 |
| | | JP 2023078762 A | 07-06-2023 |
| | | US 2023166563 A1 | 01-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022086314 A
- JP 2023049653 A
- JP 2009002594 A
- JP 2010111753 A
- US 4414370 B
- JP 59006207 A
- JP 5058805 A
- JP 1313522 A
- US 5010166 B


### Non-patent literature cited in the description


- *Akita Prefectural University Web Journal B*, 2019, vol. 6, 216-222
- *Toa Synthetic Research Annual Report TREND2000*, vol. 3, 42-45